# EUROPEAN PATENT APPLICATION

(11) **EP 2 916 495 A1**
(43) Date of publication of application: **09.09.2015**
(21) Application number: 15157551.1
(22) Date of filing: 04.03.2015
(51) Int. Cl.: H04L 12/58

(54) **Information processing system, an information processing apparatus and a medium storing an information processing program**

(30) Priority: 04.03.2014 JP 2014041708; 23.02.2015 JP 2015032516
(71) Applicant: Ricoh Company, Ltd., Tokyo 143-8555 (JP)
(72) Inventor: Hashimoto, Takahiro, Ohta-ku, Tokyo 143-8555 (JP)
(74) Representative: Maury, Richard Philip

(57) **Abstract**

An information processing apparatus includes a computer that executes a program to perform a process. The process includes storing files shared by a plurality of users in a file storage. The process also includes distributing information, which is received from one of a plurality of terminal devices, to at least another one of the terminal devices, which is related to the one of the terminal devices. The process further includes outputting a log of one of the files and the information that are displayed on the one of the terminal devices during a predetermined time period.

## Description

### BACKGROUND OF THE INVENTION

### 1. Field of the Invention

The present invention generally relates to an information processing system, information processing apparatus and information processing program.

### 2. Description of the Related Art

Japanese Laid-Open Patent Application No. 2013-161481 discloses a group messaging system that can achieve a group file management using a messenger. In the group messaging system, when an activity occurs, such as a file registration of a file managed in a shared group in a cloud server, the occurrence of the activity is notified through a chat room of a messenger group that is mapped in the shared group by linking the messenger server and the cloud server.

A plurality of users may share a file by using an information processing apparatus such as a file server that can achieve file sharing between the users. The users sharing a file may share a comment on the file by using an information processing apparatus such as a chat server.

However, in the information processing system performing file sharing between a plurality of users and exchanging comments on a file, there is no mechanism or structure to leave the file sharing and the exchange of comments performed in a certain period of time as a record.

Thus, it is desirous to provide an information processing technique that can leave a file sharing and an exchange of comments performed in a certain period of time as a record.

### SUMMARY OF THE INVENTION

There is provided according to an aspect of the invention an information processing apparatus includes a computer that executes a program to perform a process of implementing functional parts. The functional parts include a storing part that stores files shared by a plurality of users in a file storage. The functional parts include a distributing part that distributes information, which is received from one of a plurality of terminal devices, to at least another one of the terminal devices, which is related to the one of the terminal devices. The functional parts further include an outputting part that outputs a log of one of the files and the information that are displayed on the one of the terminal devices during a predetermined time period.

There is provided according to another aspect of the invention an information processing system including the above-mentioned information processing apparatus and the terminal devices connected to the information processing apparatus through a network. Each of the terminal devices includes a displaying part that displays the files acquired from the file storage and the information distributed and exchanged between the terminal devices by the distributing part.

There is provided according to further aspect of the invention a non-transitory computer readable recording medium storing a program to cause a computer to execute a process of implementing functional parts. The functional parts include a storing part that stores files shared by a plurality of users in a file storage. The functional parts include a distributing part that distributes information, which is received from one of a plurality of terminal devices, to at least another one of the terminal devices, which is related to the one of the terminal devices. The functional part further include an outputting part that outputs a log of one of the files and the information that are displayed on the one of the terminal devices during a predetermined time period.

Other objects, features and advantages of the present invention will become more apparent from the following detailed description when read in conjunction with the accompanying drawings.

The objects and advantages of the invention will be realized and attained by means of the elements and combinations particularly pointed out in the claims.

It is to be understood that both the foregoing general description and the following detailed description are exemplary and explanatory and not restrictive of the invention.

### BRIEF DESCRIPTION OF THE DRAWINGS

FIG. 1 is a structure diagram of an information processing system according to an embodiment;
FIG. 2 is block diagram of a hardware structure of a computer according to the embodiment;
FIG. 3 is a block diagram of a functional structure of a smart device according to the embodiment;
FIG. 4 is a block diagram of a functional structure of a chat server according to the embodiment;
FIG. 5 is a block diagram of functional structure of a relay server according to the embodiment;
FIG. 6 is a block diagram of a functional structure of a file server according to the embodiment;
FIG. 7 is an illustration of a WebUI displaying a two-dimensional cord;
FIG. 8 is an illustration of a screen for reading the two-dimensional cord;
FIG. 9 is an illustration of information acquired from the two-dimensional cord;
FIG. 10 is a flowchart of a smart device registering process;
FIG. 11 is an illustration of a success screen;
FIG. 12 is a sequence chart of a group creating process;
FIG. 13 is an illustration of a group creating screen;
FIG. 14 is an illustration of a group selecting screen for chatting;
FIG. 15 is an illustration of a chatting screen;
FIG. 16 is an illustration of a file selecting screen;
FIG. 17 is an illustration of the chatting screen on which file contents are displayed;
FIG. 18 is an illustration of the chatting screen in conference;
FIG. 19 is an illustration of the chatting screen when sending a reply;
FIG. 20 is a sequence chart of a chatting process when creating minutes;
FIG. 21 is an illustration of a chat message;
FIG. 22 is an illustration of a structure of a log saved by a file server;
FIG. 23 is a flowchart of a minutes creating process;
FIG. 24 is an illustration of an example of the minutes created by the minutes creating process; and
FIG. 25 is an illustration of an operation performed when sending an image as a reply;
FIG. 26 is an illustration of another example of the minutes created by the minutes creating part;
FIG. 27 is an illustration of a further example of the minutes created by the minutes creating part;
FIG. 28 is an illustration of the minutes that is created as a moving image;
FIG. 29 is an illustration of a moving image displayed on a smart device; and
FIG. 30 is a structure diagram of another information processing system according to the embodiment.

### DETAILED DESCRIPTION OF THE EMBODIMENTS

A description will now be given, with reference to the drawings, of embodiments of the present invention. In those drawings, the same parts are given the same reference numerals, and descriptions thereof may be omitted.

### <System Structure>

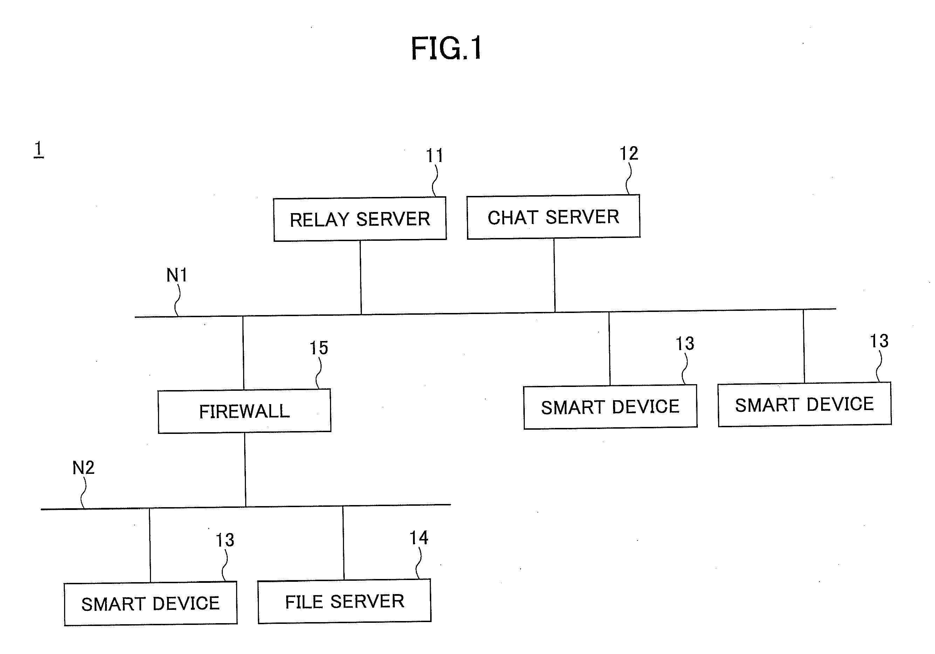

FIG. 1 is a diagram of a structure of an information processing system according to an embodiment. The information processing system illustrated in FIG. 1 includes a relay server 11, chat server 12, smart devices 13, file server 14 and firewall (FW) 15.

At least one of the relay server 11, chat server 12 and smart devices 13 is connected to a network N1. At least one of the smart devices 13 and the file server 14 are connected to a network N2 such as a LAN. The network N1 and the network N2 are connected to each other via the firewall 15.

The relay server 11 receives a request to the file server 14, which is connected to the network N2, from the chat server 12 and smart devices 13, which are connected to the network N1, and relays the request to the file server 14.

The chat server 12 receives speech contents for chatting between the smart devices 13 from the smart devices 13, and distributes the speech contents to the smart devices 13. Each smart device 13 is an example of a terminal device used by a user.

The file server 14 saves files shared by users and a log of contents of conversations performed by the users through the chat server 12. Because the file server 14 is connected to the network server N2, the file server 14 cannot be directly accessed by the relay server 11, chat server 12 and smart devices 13 that are connected to the network N1. However, the file server 14 can access the relay server 11, chat server 12 and smart devices 13 that are connected to the network N1.

The file server 14 continuously inquires the relay server 11 whether a request to the file server 14 is received. If the relay server 11 has received the request, the file server 14 acquires the request from the relay server 11 and processes the request. Additionally, the file server 14 sends a result of the processing on the request to the relay server 11. The smart device 13 that has sent the request can receive the result of the processing on the request from the relay server 11. Thus, a request from the smart devices 13, which are connected to the network N1, to the file server 14, which is connected to the network N2, can be indirectly sent to the file server 14 through the relay server 11.

The relay server 11, chat server 12 and smart devices 13, which are connected to the network N1, can communicate with each other. The smart devices 13 and file server 14, which are connected to the network N2, can communicate with each other. In FIG. 1, each smart device 13 may be a device that can be operated by a user, such as a smartphone, a tablet-type terminal, a cellular phone, a notebook-type personal computer (note PC), etc.

It should be noted that the information processing system of FIG 1 is merely an example, and various system structures can be made according to purposes and applications. For example, the relay server 11, chat server 12 and file server 14 illustrated in FIG. 1 may be configured separately by a plurality of computers. The relay server 11 and chat server 12 illustrated in FIG. 1 may be integrated into a single computer.

### <Hardware Structure>

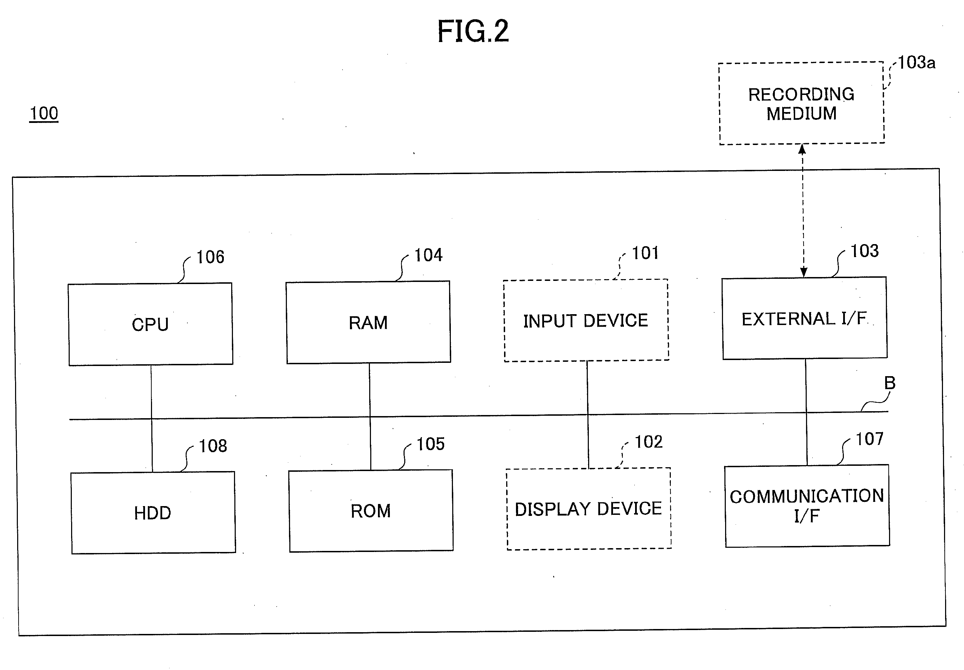

The relay server 11, chat server 12 and file server 14 can be materialized by, for example, a computer having a hardware structure illustrated in FIG. 2. Each smart device 13 also includes the hardware structure illustrated in FIG. 2. FIG. 2 is a block diagram of a hardware structure of a computer according to the present embodiment.

The computer 100 illustrated in FIG. 2 includes an input device 101, display device 102, external interface (I/F) 130, RAM 104, ROM 105, CPU 106, communication interface (I/F) 107, hard disk drive (HDD) 108, etc., that are mutually connected by a bus B. The input device 101 and display device 102 may be used by connecting to the bus B when necessary.

The input device 101 includes a keyboard, mouse, touch panel, etc., and is used for inputting various operation signals to the computer 100. The display device 102 includes a display unit or the like to display thereon a result of processing by the computer 100. The communication I/F 107 is an interface for connecting the computer 100 to the networks N1 and N2. The computer 100 can perform data communication with other computers through the communication I/F 107.

The HDD 108 is a non-volatile storage device that stores programs and data. The programs and data stored in the HDD 108 include an operating system (OS), which is basic software for controlling the entire computer 100, and application software providing various functions on the OS. The HDD 108 manages the programs and data stored therein according to a predetermined file system and/or database (DB).

The external I/F 103 interfaces communication with other external devices. The external devices include a recording medium 103a and the like. The computer 100 can read and/or write data from/on the recording medium 103a through the external I/F 103. The recording medium 103a may be a flexible disk, CD, DVD, SD memory card, USB memory, etc.

The ROM 105 is a non-volatile semiconductor memory (storage device) that can retain programs and data after a power is turned off. The ROM 105 stores data and programs such as BIOS, OS setting and network setting that are used when booting the computer 100. The RAM 104 is a volatile semiconductor memory (storage device) that temporarily saves programs and data.

The CPU 106 is an operating unit that reads the programs and data from the storage devices such as the ROM 105 and HDD 108, and develops the programs and data on the RAM 104 to perform various processes according to the programs and data so as to materialize controls and functions of the entire computer 100.

The computer 100 according to the present embodiment is capable of materializing various processes mentioned later by the above-mentioned hardware structure.

### <Software Structure>

### ≪Smart Device≫

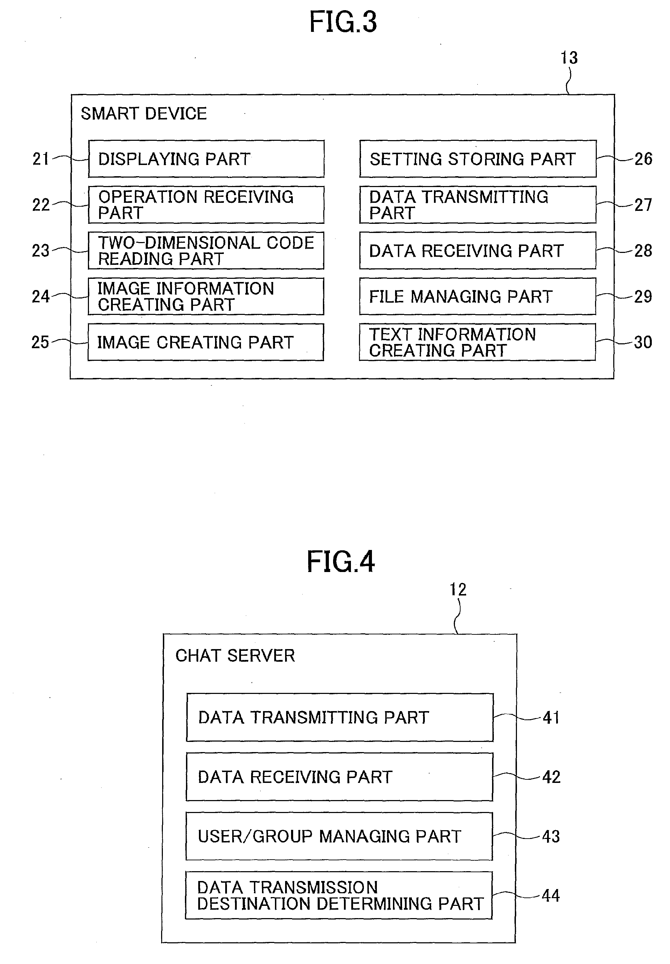

The smart device 13 according to the present embodiment is materialized by a process performed by processing parts illustrated in FIG. 3. FIG. 3 is a block diagram of a functional structure of the smart device 13 according to the present embodiment. The smart device 13 executes an application program (hereinafter, referred to as the "application") mounted thereon to materialize a displaying part 21, operation receiving part 22, two-dimensional code reading part 23, image information creating part 24, image creating part 25, setting storing part 26, data transmitting part 27, data receiving part 28, file managing part 29 and text information creating part 30.

The displaying part 21 displays information regarding file contents, contents of conversations in chatting, a file selecting screen, etc., to a user. The operation receiving part 22 receives an operation performed by a user. The two-dimensional code reading part 23 reads a two-dimensional code.

The image information creating part 24 creates image position information regarding a position of a partial image selected by a user from among image of files displayed on the displaying part 21. The image creating part 25 creates an image from the image position information. The setting storing part 26 stores settings of a user name, password, group, etc.

The data transmitting part 27 transmits the contents of conversations in chatting and the image position information. The data receiving part 28 receives the contents of conversations in chatting and the image position information. The file managing part 29 saves and discards a cache of the received file. The text information creating part 30 creates character string information regarding a positon and name of a character string selected by the user from among files displayed on the displaying part 21. The text information creating part 30 creates character string information regarding a character string selected by the user from among the contents of conversations in chatting displayed on the displaying part 21.

### ≪Chat Server≫

The chat server 12 according to the present embodiment is materialized by a process performed by processing parts illustrated in FIG. 4. FIG. 4 is a block diagram of a functional structure of the chat server 12 according to the present embodiment. The chat server 12 executes a program to materialize a data transmitting part 41, data receiving part 42, user/group managing part 43 and data transmission destination determining part 44.

The data transmitting part 41 transmits data regarding the contents of conversations in chatting. The data receiving part 42 receives data regarding the contents of conversations in chatting. The user/group managing part 43 manages users who join chatting and groups to which the contents of conversations in the chatting are transmitted. The data transmission destination determining part 44 determines the group to which the contents of conversations in the chatting are transmitted. The chat server 12 provides a chatting function.

### ≪Relay Server≫

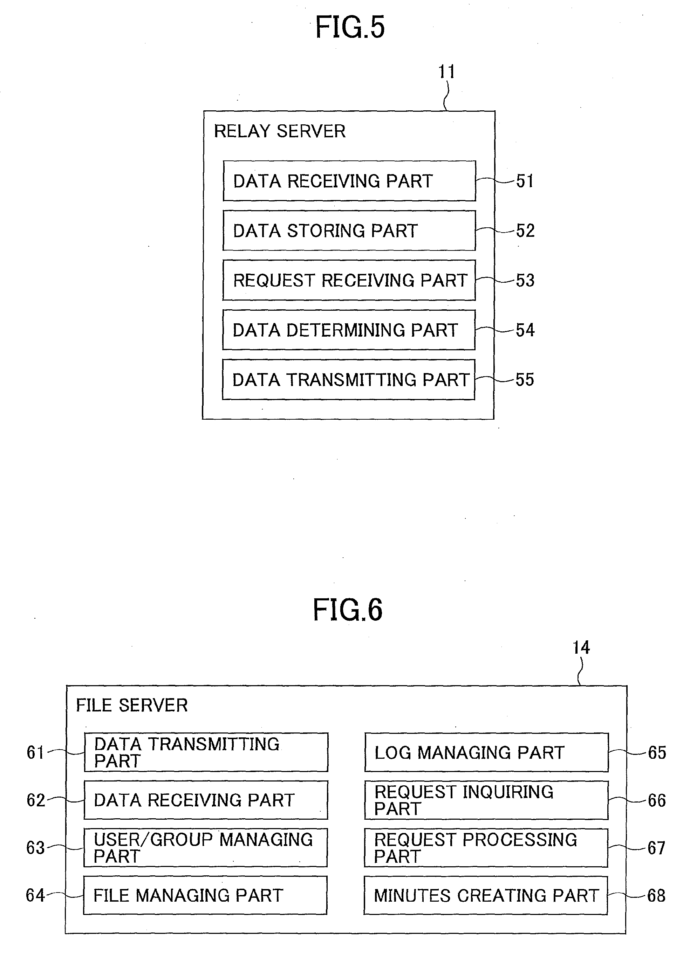

The relay server 11 according to the present embodiment is materialized by a process performed by processing parts illustrated in FIG. 5. FIG. 5 is a block diagram of a functional structure of the relay server 11 according to the present embodiment. The relay server 11 executes a program to materialize a data receiving par 51, data storing part 52, request receiving part 53, data determining part 54, and data transmitting part 55.

The data receiving part 51 receives data, a smart device ID of the transmitting smart device that transmits the data, and a file server ID of the destination of transmission of the data from the smart devices 13 connected to the network N1. The data storing part 52 stores various kinds of data received by the data receiving part 51 by relating them to each other. The request receiving part 53 receives an inquiry as to whether a request is made by the file server 14.

The data determining part 54 determines whether the data related to the file server ID of the file server 14 for which the inquiry is received by the request receiving part 53 is stored in the data storing part 52. The data transmitting part 55 transmits, when the data determining part 54 determines that the data is stored, the data to the file server 14 that has received the request.

### ≪File Server≫

The file server 14 according to the present embodiment is materialized by a process performed by processing parts illustrated in FIG. 6. FIG. 6 is a block diagram of a functional structure of the file server 14 according to the present embodiment. For example, the file server 14 execute a program to materialize a data transmitting part 61, data receiving part 62, user/group managing part 63, file managing part 64, log management part 65, request inquiring part 66, request processing part 67 and minutes creating part 68.

The data transmitting part 61 transmits data regarding files and a result of processing on a request. The data receiving part 62 receives data regarding a file, a log of contents of conversation in chatting and a request from the smart devices 13. The user/group managing part 63 manages users who join chatting and groups to which contents of conversations in the chatting is transmitted.

The file managing part 64 saves the received file and reads the saved file. The log managing part 65 saves a log (history) of contents of conversations in chatting. The request inquiring part 66 inquires the relay server 11 whether there is a request. The request processing part 67 processes the request based on the contents of the request. The minutes creating part 68 receives a conference start notification and a conference end notification, and acquires a log of the conference period from the conference start notification to the conference end notification to create minutes of the conference.

### <Details of Process>

Hereinafter, a description is given in detail of the information processing system 1 according to the present embodiment.

First, it is necessary for the information processing system 1 according to the present embodiment to register the smart device 13, which can access the file server 14, in the file server 14. For example, in the information processing system 1, the smart device 13, which can access the file server 14, is registered (pairing) using a two-dimensional code as mentioned below.

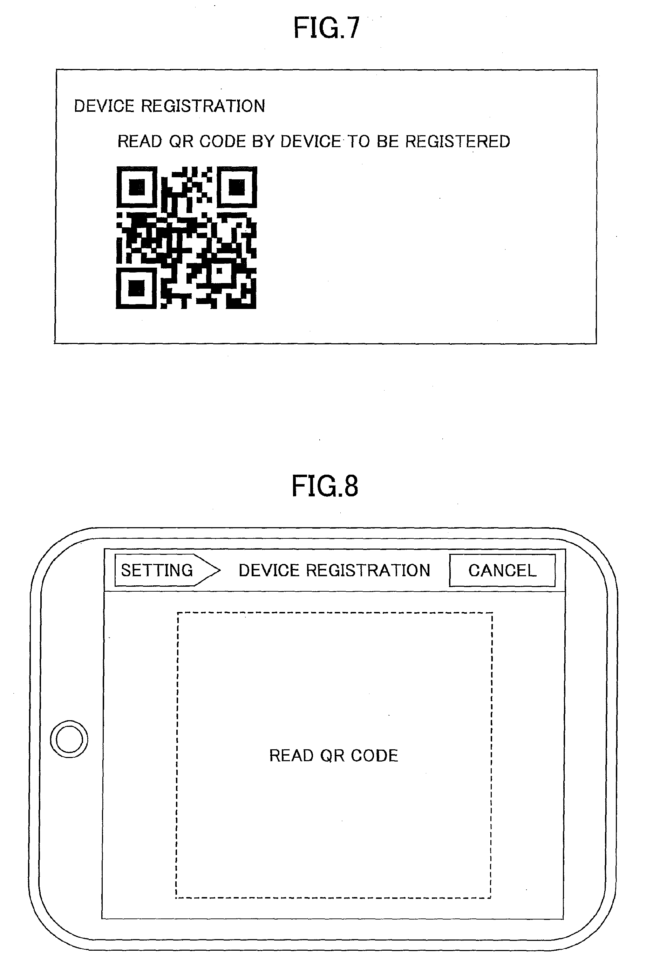

FIG. 7 is an illustration of a WebUI that displays a two-dimensional code. A two-dimensional code such as the QR code (registered trademark) or the like is displayed on the WebUI of FIG. 7. A user causes the smart device 13 to be registered as a device, which can access the file server 14, to read the two-dimensional code displayed on the WebUI.

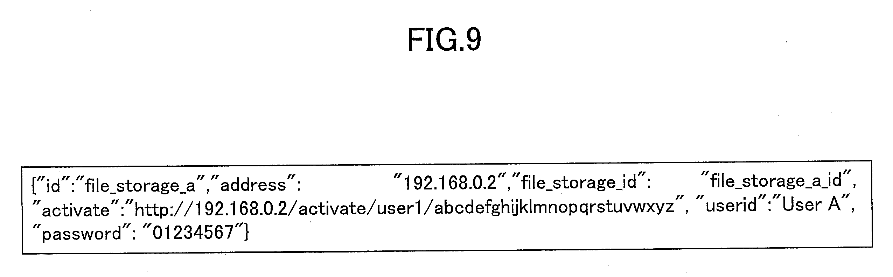

FIG. 8 is an illustration of a screen used for reading a two-dimensional cord. The user can cause the smart device 13 to read the two-dimensional cord by adjusting the position of the smart device 13 so that the photographed image of the two-dimensional code is displayed within a dashed square on the screen illustrated in FIG. 8. The registration of the smart device 13 is performed irrespective of whether a communication is performed through the relay server 11. The smart device 13 can acquire information necessary for accessing the file server 14 as illustrated in FIG. 9 by reading the two-dimensional code.

It should be noted that the WebUI of FIG. 7 may be displayed by a terminal device operated by the user accessing an information processing apparatus such as the file server 14. The two-dimensional code may be printed on a paper to be photographed.

FIG. 9 is an illustration of information acquired from the two-dimensional code. FIG. 9 displays information necessary for accessing the file server 14. The information of FIG. 9 contains an ID and IP address inherent to the file server 14, an ID used when going through the relay server, and a link used for activation.

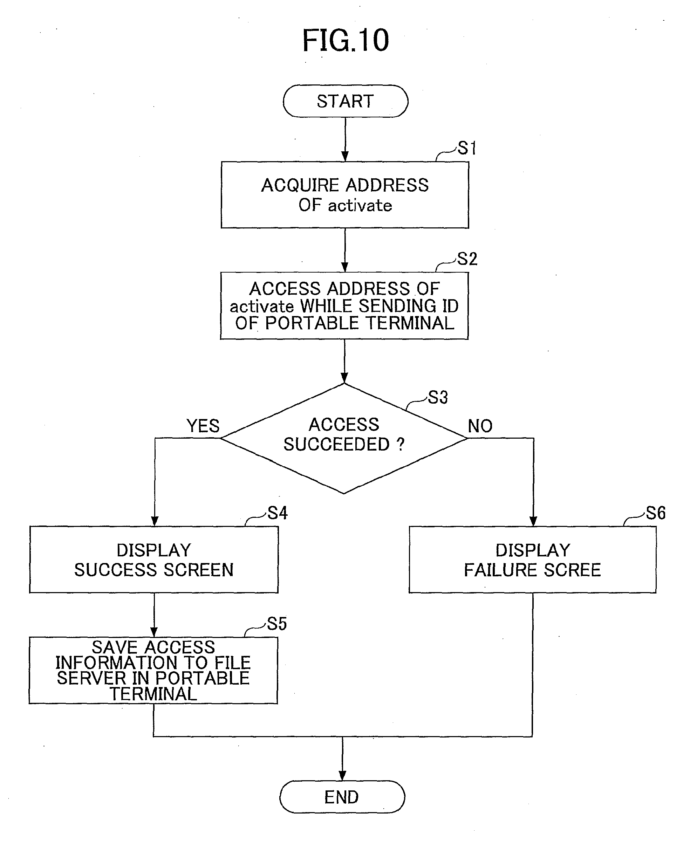

FIG. 10 is a flowchart of a smart device registering process. The smart device 13 acquires, in step S1, a link used for activation such as illustrated in FIG. 9 that is read from the two-dimensional code of FIG. 7.

In step S2, the smart device 13 accesses the link used for activation (an address of the activation) while sending the smart device ID of the smart device 13.

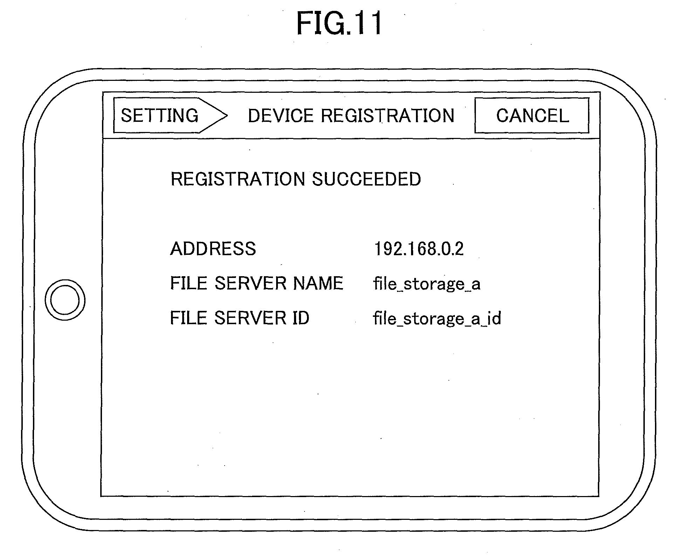

In step S3, the smart device 13 accesses the link used for the activation and determines whether a registration of the smart device 13 in the file server 14 is completed. When the registration of the smart device 13 in the file server 14 is completed by accessing the link used for activation, the smart device 13 displays, in step S4, a success screen such as illustrated in FIG. 11.

FIG. 11 is an illustration of a success screen. The success screen of FIG. 11 displays information indicating the success of registration of the smart device 13, and also displays an IP address, file server name and file server ID of the file server 14 in which the smart device 13 was registered. The process proceeds to step S5 after completion of the process of step S4. The smart device 13 saves, in step S5, information necessary for accessing the file server 14 (access information for the file server 14). If the registration of the smart device 13 in the file server 14 fails, the smart device 13 displays, in step S6, a failure screen that displays the failure of the registration.

The flowchart of FIG 10 indicates the smart device registering process of performing the activation based on the address of the activation acquired from the two dimensional code, registering the information of the smart device 13 in the file server 14, and registering the information of the file server 14 in the smart device 13.

The file server 14 does not permit an access from the smart device 13 that has not performed the smart device registering process of FIG. 10. When using the file server 14 through the smart server 13, it is necessary to perform the smart device registering process of FIG. 10. The smart device 13 that has completed the smart device registering process is permitted to retrieve information and files that are saved in the file serve 14.

### ≪Group Creation≫

In the information processing system 1 according to the present embodiment, it is necessary to create a group to which the contents of conversations in chatting are sent. For example, in the information processing system 1, a group to which the contents of conversations in chatting are sent is created as explained below.

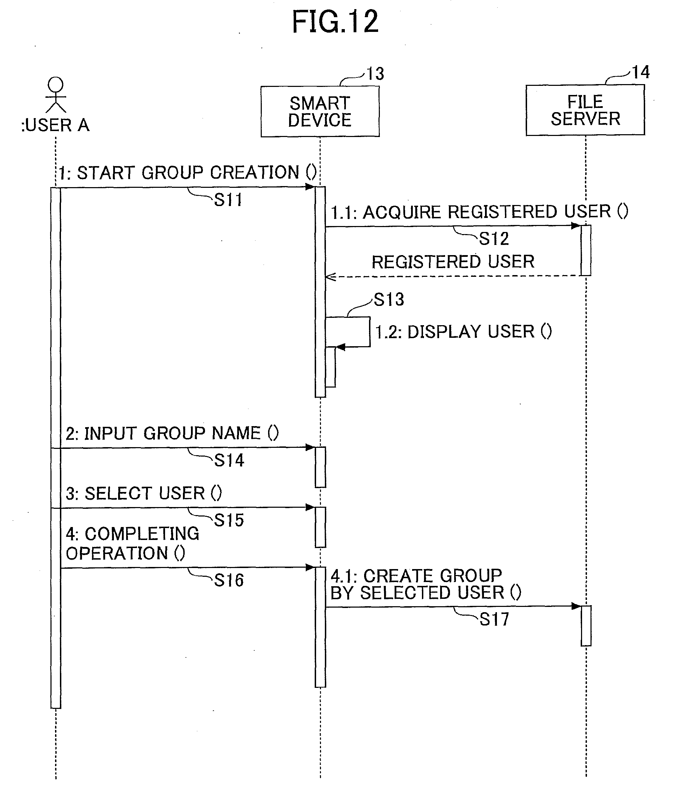

FIG. 12 is a sequence chart of a group creating process. A user who operates the smart device 13 instructs, in step S11, starting a group creating process. In step S12, the smart device 13 sends a request to acquire information regarding the registered users who are permitted to join the chatting. The file server 14 returns the information regarding the registered users to the smart device 13.

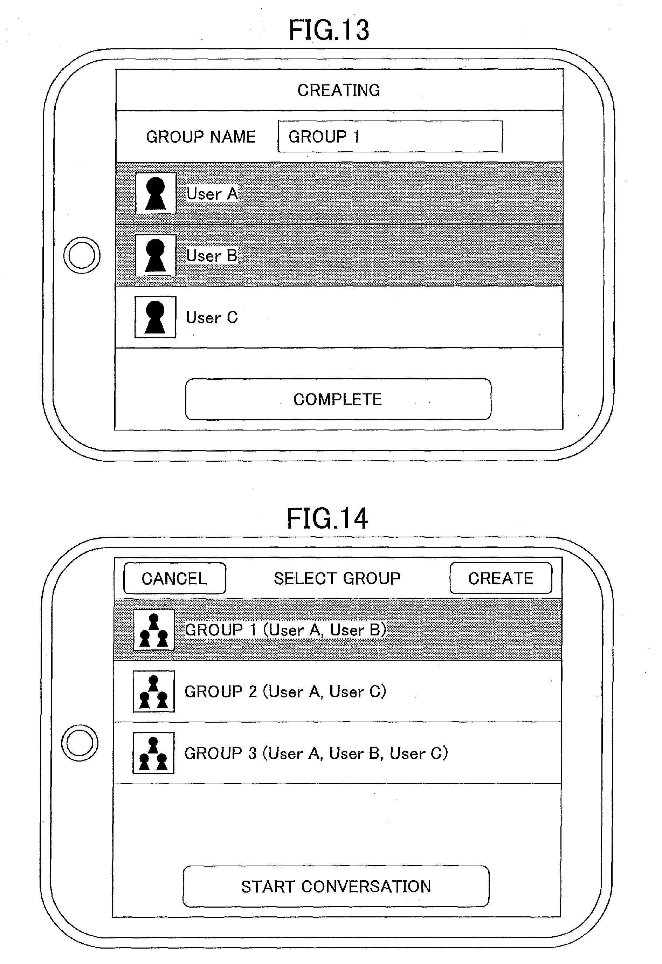

In step S13, the smart device 13 displays a group creating screen such as illustrated in FIG. 13 using the information regarding the registered users that are received from the file server 14. FIG. 13 is an illustration of an example of the group creating screen. The group creating screen is an example of a screen that is displayed on the smart device 13 to create a group. In the group creating screen contains a field for inputting a group name and a filed for selecting a user.

In step S14, the user operates the smart device 13 to input a group name into the group creating screen. Then, in step S15, the user operates the smart device 13 to select one or more users who are caused to join the group through the group creating screen. In step S16, the user operates the smart device 13 to complete the selecting process by, for example, pressing a completion button in the group creating screen.

After performing the completing operation by the user, the process proceeds to step S17 where the smart device 13 requests the file server 14 to create the group using the group name input in step S14 and the users selected in step S15. Then, the file server 14 that receives the group creating request creates the group using the group name input in step S14 and the users selected in step S15, and manages the users in the same group by being corresponding to each other.

### ≪Chatting Process≫

IN the information processing system 1 according to the present embodiment, chatting is performed between the smart devices 13 that join a group as explained below. FIG. 14 is an illustration of a group selecting screen for selecting a group for chatting. The user selects a group for chatting from the groups displayed in the group selecting screen such as illustrated in FIG. 14, and presses a button of "conversation start". The information regarding the groups displayed on the group selecting screen can be acquired from the file server 14. When the "conversation start" button is pressed, the smart device 13 notifies the chat server 12 of the group for chatting that has been selected through the group selecting screen.

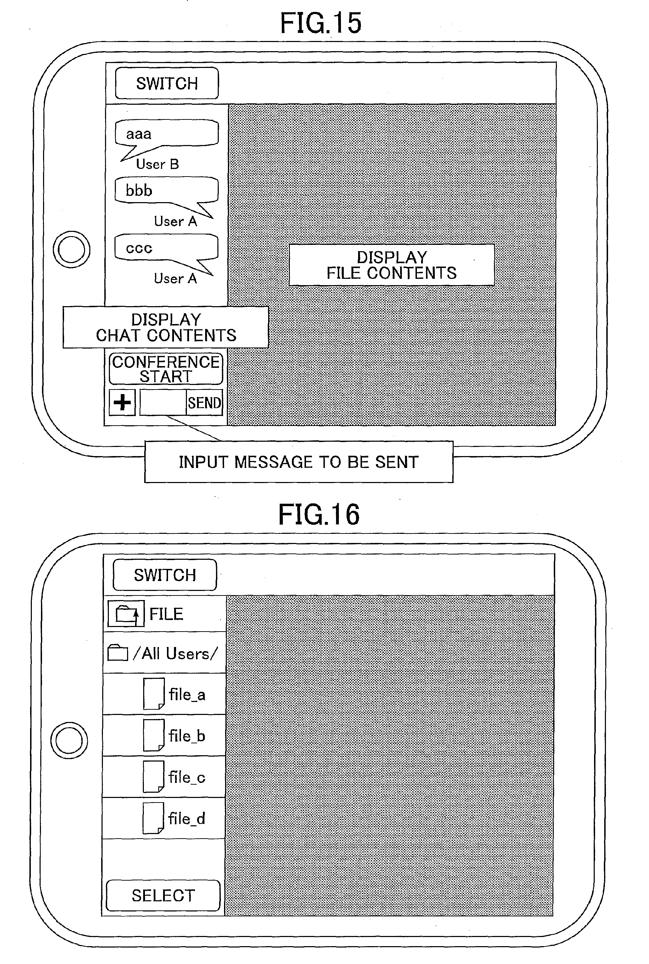

A chatting screen such as illustrated in FIG. 15 is displayed on the smart device 13 operated by the user of the group for chatting. FIG. 15 is an illustration of an example of the chatting screen.

In the chatting screen illustrated in FIG. 15, the contents of conversations in chatting are displayed on the left side of the screen, and a box for inputting a message to be sent is arranged below the area where the contents of conversations in chatting are displayed. In the chatting screen illustrated in FIG. 15, contents of files selected as mentioned below are displayed on the right side in the screen.

When a switch button located in an upper part of the chatting screen is pressed, the smart device 13 acquires a list of files from the file server 14, and displays a file selecting screen such as illustrated in FIG. 16. FIG. 16 is an illustration of an example of the file selecting screen.

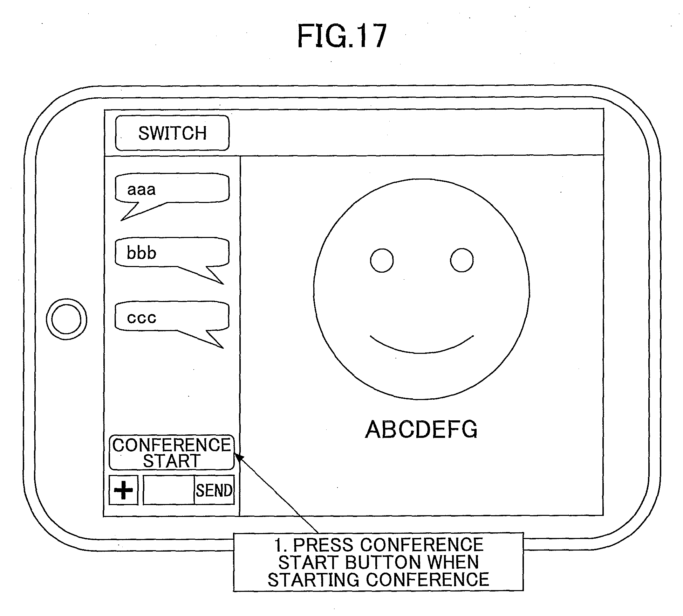

In the file selecting screen illustrated in FIG. 16, the list of files is displayed on the left side of the screen. The user selects a file of which contents are to be displayed from the list of files displayed on the file selecting screen, and presses a select button. When a file is selected from the list of files, the smart device 13 acquires the selected file from the file server 14, and displays a chatting screen such as illustrated in FIG. 17.

FIG. 17 is an illustration of an example of the chatting screen that displays the contents of the file. In the chatting screen illustrated in FIG. 17, the contents of the file selected through the file selecting screen are displayed on the right side of the screen.

For example, the chatting screen illustrated in FIG. 17 may be provided with a file sharing button in order to share the display of the contents of file with other smart devices 13. When the file sharing button is pressed, the smart device 13 that is displaying the contents of file sends the file of which contents are being displayed to other smart devices 13 operated by the users of the same group.

Additionally, the smart device 13 may notify other smart devices, which are operated by the users of the same group, of the information as a message regarding the link to the file of which contents are being displayed.

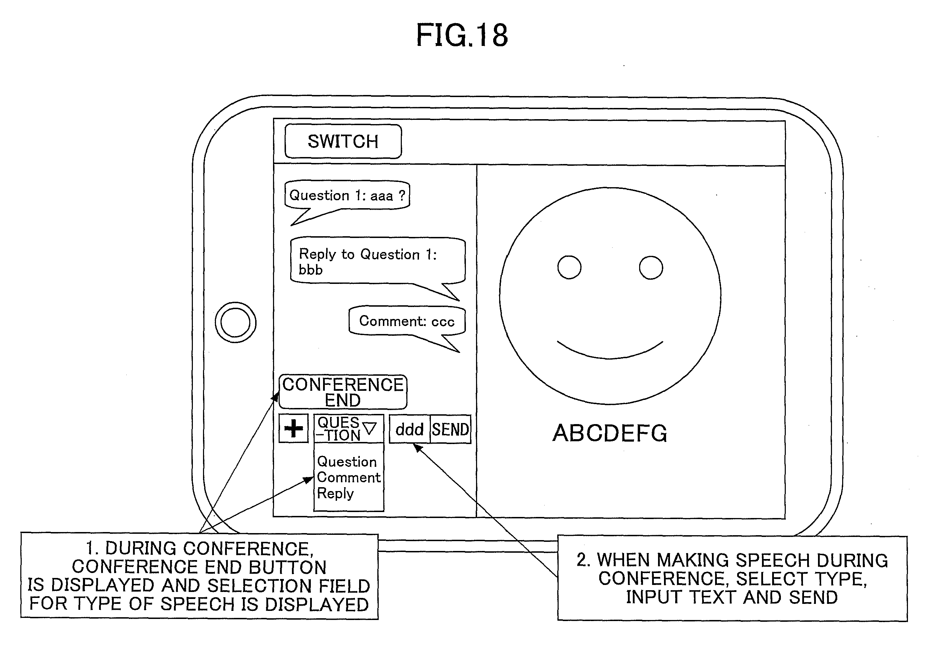

For example, the user can instruct a start of a conference by pressing a conference start button in the chatting screen illustrated in FIG. 17 in which the contents of file is displayed. When the user presses the conference start button, the screen displayed on the smart device 13 transits from the chatting screen illustrated in FIG. 17 that is displayed before starting the conference to a chatting screen as illustrated in FIG. 18 that is displayed during the conference. Hereinafter, the chatting screen displayed during a conference may be referred to as the "in-conference chatting screen".

FIG. 18 is an illustration of an example of the in-conference chatting screen that is displayed during a conference. In the in-conference chatting screen illustrated in FIG. 18, a conference end button is displayed in place of the conference start button displayed in the chatting screen illustrated in FIG. 17. In the in-conference chatting screen illustrated in FIG. 18, the user can instruct an end of a conference by pressing the conference end button.

Additionally, in the chatting screen of FIG. 18, a selecting field is arranged on the left side of a message input box. In the chatting screen illustrated in FIG. 18, one of a question, a comment and a reply can be selected as a type of speech. When sending a message during a conference, the user selects a type of speech and inputs a text in the message input box and, then, presses a send button.

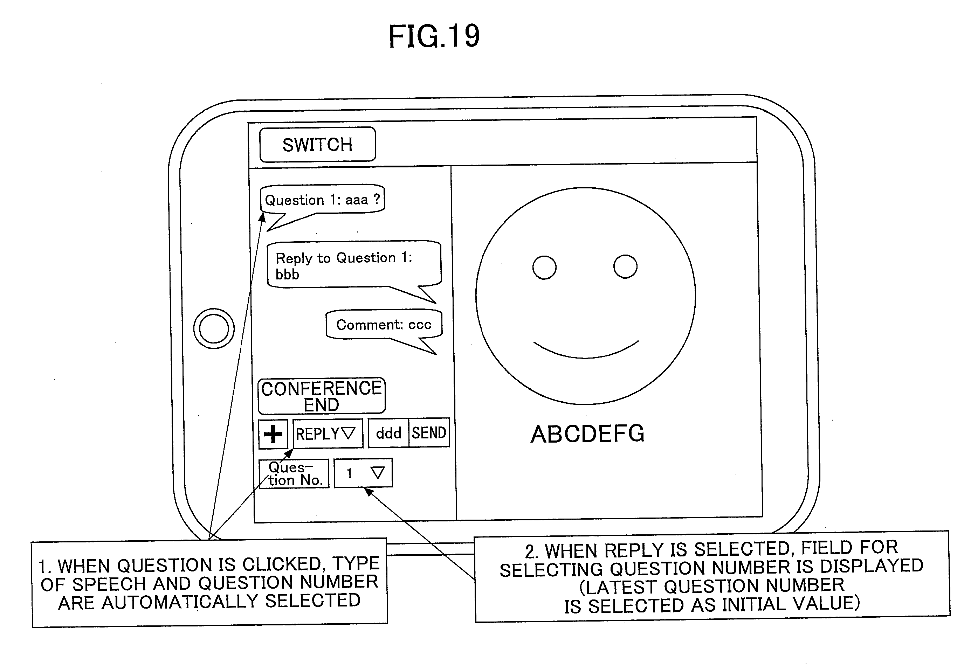

The chatting screen when inputting a reply as a type of speech becomes as illustrated in FIG. 19. FIG. 19 is an illustration of the chatting screen when sending a reply. For example, when a message of which an inquiry number is 1 is clicked in the contents of conversations in chatting on the left side of the chatting screen illustrated in FIG. 19, the "reply" is automatically selected from the selecting filed for selecting a type of speech and "1" is automatically selected from the selecting filed for selecting an inquiry number.

Additionally, in the chatting screen that is displayed when sending a reply as illustrated in FIG. 19, if the "reply" is selected from the types of speech in the selecting field, the selecting field for selecting a question number is displayed. The initial value indicated in the selecting field may be set to the number of message of the latest question. The user can select the number of question to which a reply is to be input from numbers indicated in selecting field.

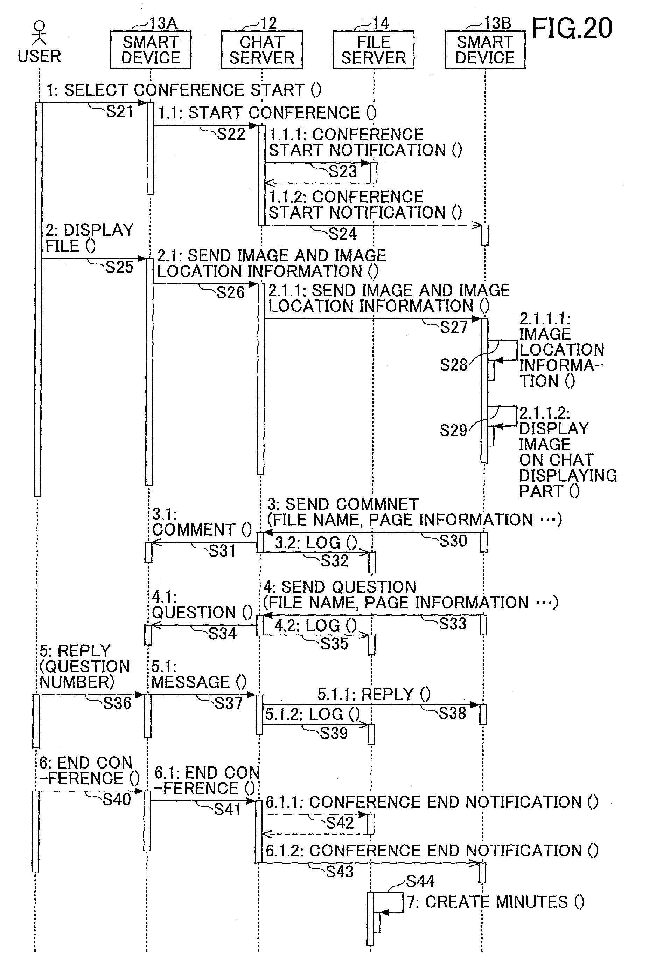

FIG. 20 is a sequence chart of a chatting process when creating minutes of a conference. In step S21, the user who operates the smart device 13A selects a start of a conference by pressing the conference start button illustrated in FIG. 15 or FIG. 17. By selecting the start of the conference, the user can instruct the information processing system 1 to start recoding logs for creating the minutes.

The smart device 13A of the display part 21 displays the in-conference chatting screen that is displayed during a conference. In step S22, the data transmitting part 27 of the smart device 13A sends a conference stat notification to the chat server 12.

In step S23, the data transmitting part 41 of the chat server 12 sends the conference start notification to the file server 41. The log managing part 65 of the file server 14 receives the conference start notification. Additionally, in step S24, the data transmitting part of the chat server 12 sends the conference start notification to the smart device 13B of the group determined by the data transmission destination determining part 44. The display part 21 of the smart device 13B displays the in-conference chatting screen.

In step S25, the user who operates the smart device 13A causes the smart device 13A to display the file selecting screen such as illustrated in FIG. 16. The user selects a file of which contents are to be displayed from the list of files, and causes the in-conference chatting screen such as illustrated in FIG. 18 to be displayed.

In step S26, the data transmitting part 27 of the smart device 13A sends the image displayed in the in-conference chatting screen such as illustrated in FIG 18 and image location information of the image. In step S27, the data transmitting part 41 of the chat server 12 sends the image and the image location information to the smart device 13B of the group determined by the data transmission destination determining part 44.

In step S28, the file managing part 29 of the smart device 13B retains the file location information. Additionally, in step S28, the display part 21 of the smart device 13B displays the image on the right side part of the in-conference chatting screen such as illustrated in FIG. 18.

It is assumed that the user who operates the smart device 13B selects a comment as a type of speech from the in-conference chatting screen illustrated in FIG. 18, and inputs a text in the box for inputting a message to be sent and presses the send button.

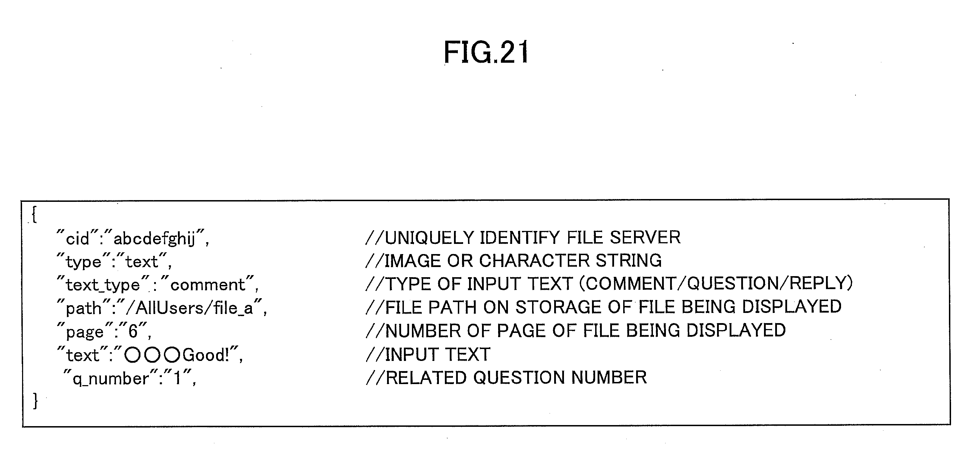

In step S30, the data transmitting part 27 of the smart device 13B sends a chat message such as illustrated in FIG. 21 to the chat server 12. The chat message sent in step S30 contains the message and the type of speech that are input by the user through the in-conference chatting screen illustrated in FIG. 18.

FIG. 21 is an illustration of an example of the chat message. The chat message illustrated in FIG. 21 contains a file server ID, type of display, type of speech, file path, page number, message and a question number.

The file server ID is information for uniquely identifying the file server 14. The type of display is information indicating whether a character string is selected or an image is selected. The type of speech is information indicating the type of speech selected by the user. The file path is information indicating a path to the file in the file server 14 that is being displayed on the right side part of the chatting screen illustrated in FIG. 18. The page number is information indicating a page number of the file that is being displayed in the right side part of the chatting screen.

The message is information indicating the text that is input by the user in the box for inputting a message to be sent. The question number is information indicating which question the reply is sent to when the type of speech is "reply".

In step S31, the data transmitting part 41 of the chat server 12 sends the chat message received from the smart device 13B such as illustrated in FIG. 21 to the smart device 13A of the group determined by the data transmission destination determining part 44. The displaying part 21 of the smart device 13A reflects the contents of the received message in the in-conference chatting screen. For example, the displaying part 21 of the smart device 13A displays the comment that is input at the smart device 13A in the left side part of the in-conference chatting screen.

Additionally, in step S32, the data transmitting part 41 of the chat server 12 sends the log that is created from the chat message such as illustrated in FIG. 21 to the file server 14 to cause the file server 14 to save the the log.

Then, it is assumed that the user who operates the smart server 13B selects a question as a type of speech from the in-conference chatting screen illustrated in FIG. 18, and inputs a text in the box for inputting a message to be sent and presses the send button.

In step S33, the data transmitting part 27 of the smart device 13B sends a chat message such as illustrated in FIG. 21 to the chat server 12. The chat message sent in step S33 contains the message and the type of speech that are input by the user who operates the smart device 13B through the in-conference chatting screen illustrated in FIG. 18.

In step S34, the data transmitting part 41 of the chat server 12 sends the chat message received from the smart device 13B such as illustrated in FIG. 21 to the smart device 13A of the group that is determined by the data transmission destination part 44. The displaying part 21 of the smart device 13A reflects the contents of the received chat message in the in-conference chatting screen. For example, the displaying part 21 of the smart device 13A displays the question input at the smart device 13B in the left side part of the in-conference chatting screen.

Additionally, in step S35, the data transmitting part 41 of the chat server 12 sends the log created from the chat message such as illustrated in FIG. 21 to the file server 14 to cause the file server 14 to save the log.

Then, it is assumed that the user who operates the smart device 13A inputs a reply to the question input at the smart device 13B through the in-conference chatting screen illustrated in FIG. 19, and presses the send button.

In step S37, the data transmitting part 27 of the smart device 13A sends the chat message such as illustrated in FIG. 21 to the chat server 12. The chat message sent in step S37 contains the message and the type of speech that are input by the user who operates the smart device 13A through the in-conference chatting screen illustrated in FIG. 19.

In step S38, the data transmitting part 41 of the chat server 12 sends the chat message received from the smart device 13A such as illustrated in FIG. 21 to the smart device 13B of the group that is determined by the data transmission destination determining part 44. The displaying part 21 of the smart device 13B reflects the contents of the received chat message in the in-conference chatting screen. For example, the displaying part 21 of the smart device 13B displays the reply input at the smart device 13A in the left side part of the in-conference chatting screen.

Additionally, in step S39, the data transmitting part 41 of the chat server 12 sends the log created from the chat message such as illustrated in FIG. 21 to the file server 14 to cause the file server 14 to save the log.

In step S40, the user who operates the smart device 13A selects the end of the conference by pressing the conference end button illustrated in FIG. 18 or FIG. 19. By selecting the conference end button, the user can instruct the information processing system 1 to create minutes of the conference.

The display device 13A of the smart device 13A displays the chatting screen such as illustrated I FIG. 15 or FIG. 17 that is displayed before starting a conference. In step S41, the data transmitting part 27 of the data transmitting part 27 sends a conference end notification to the chat server 12.

In step S42, the data transmitting part 41 of the chat server 12 sends the conference end notification to the file server 14. The log managing part 65 of the file server 14 starts creating the minutes after receiving the conference end notification. Additionally, in step S43, the data transmitting part 41 of the chat server 12 sends the conference end notification to the smart device 13B of the group that is determined by the data transmission destination determining part 44. The displaying part 21 of the smart device 13B displays the chatting screen that is displayed before starting a conference.

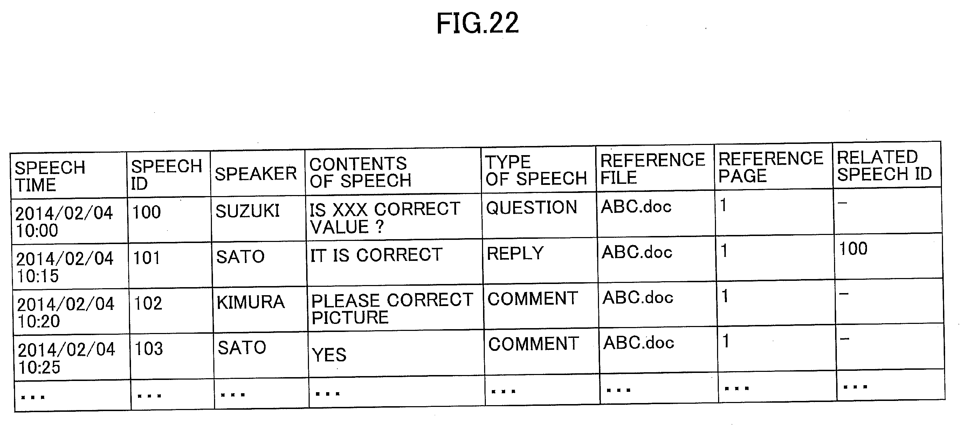

In step S44, the minutes creating part 68 of the file server 14 creates the minutes from the logs received from the chat server 21 in the period (during the conference) between the time at which the conference start notification is received to the time at which the conference end notification is received. The log managing part 65 of the file server 14 saves the logs received from the chat server 12 during the conference in the manner as illustrated in FIG. 22.

FIG. 22 is an illustration of logs stored in the file server 14. Each log illustrated in FIG. 22 includes as items a speech time, speech ID, speaker, contents of speech, type of speech, reference file, reference page and related speech ID.

The contents of speech, type of speech, reference file, reference page and related speech ID contained in each log illustrated in FIG. 22 correspond to the message, type of message, file path, page number and question number contained in the chat message illustrated in FIG. 21, respectively.

The logs illustrated in FIG. 22 can be created by adding the speech time, speech ID and speaker to the contents of the chat message illustrated in FIG. 21. It should be noted that the speech time, speech ID and speaker may be previously included in the chat message illustrated in FIG. 21. The speech time is information indicating the time of inputting the message corresponding to the chat message. The speech ID is information that uniquely identifies the message. The speaker is information that uniquely identifies the user who inputs the message corresponding to the chat message.

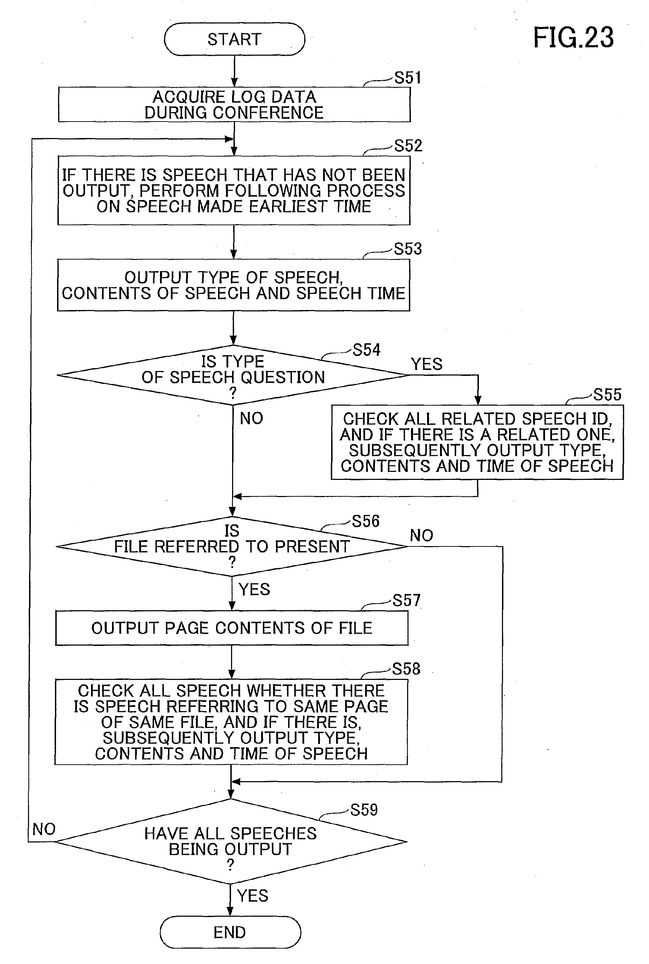

The minutes creating part 68 of the file server 14 acquires the logs during the conference such as illustrated in FIG. 22, and creates the minutes according to a process illustrated in FIG. 23. FIG. 23 is a flowchart of a minutes creating process.

The minutes creating part 68 of the file server 14 acquires logs in the period of the conference from the time at which the conference start notification is received and the time at which the conference end notification is received from the log management part 65. In step S52, the minutes creating part 68 performs the process of step S53 and subsequent process on the log as a log to be processed if there is a log that has not been output in an order in which the log having an earlier speech time is processed first.

In step S53, the minutes creating part 68 outputs the type of speech, contents of speech and speech time of the log to be processed. In step S54, the minutes creating part 68 determines whether the type of speech of the log to be processed is a question.

If the type of speech of the log to be processed is a question, the minutes creating part 68 checks all of the "related speech IDs" of the log acquired in step S51, and searches for the log in which the speech ID of the log to be processed is recorded as the related speech ID. If there is a related log in which the speech ID of the log to be processed is recorded as the related speech ID, the minutes creating part 68 outputs the type of speech, contents of speech and speech time of the related log.

Proceeding to step S56, the minutes creating part 68 checks the log to be processed and a reference file of the related log, and determines whether the reference file is recorded. If the reference file is not recorded, the minutes creating part 68 proceeds to step S59 to determine whether all logs have been output.

If all logs have already been output, the minutes creating part 68 ends the minutes creating process illustrated in FIG. 23. If there is a log that has not been output, the minutes creating part 68 returns to step S52 to continue the process.

On the other hand, if it is determined in step S56 that the reference file is recorded, the minutes creating part 68 proceeds to step S57 to output the contents of the file corresponding to the log to be processed and the reference file and reference page of the related log. Further, the minutes creating part 68 proceeds to step S58 to check the reference file and all of the reference pages of the log acquired in step S51. If there is a related log in which the reference file and reference pages output in step S57 are recorded, the minutes creating part 68 outputs the type of speech, contents of speech and speech time of the related log.

Thereafter, the minutes creating part proceeds to step S59 to determine whether all logs have been output. If all logs have been output, the minutes creating part 68 ends the minutes creating process illustrated in FIG. 23. If there is a log that has not been output, the minutes creating part 68 returns to step S52 to continue the process.

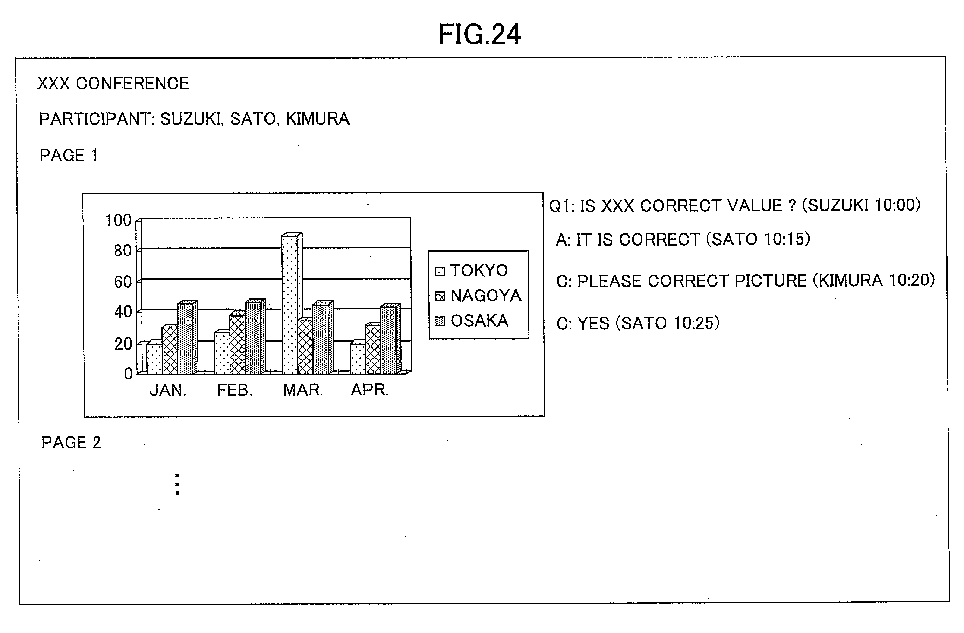

FIG. 24 is an illustration of an example of the minutes that is created according to the minutes creating process. In the minutes illustrated in FIG. 24, the contents of conversations in chatting are displayed on the right side part, and the contents of the file referred to when the contents of conversations are sent are displayed on the left side part.

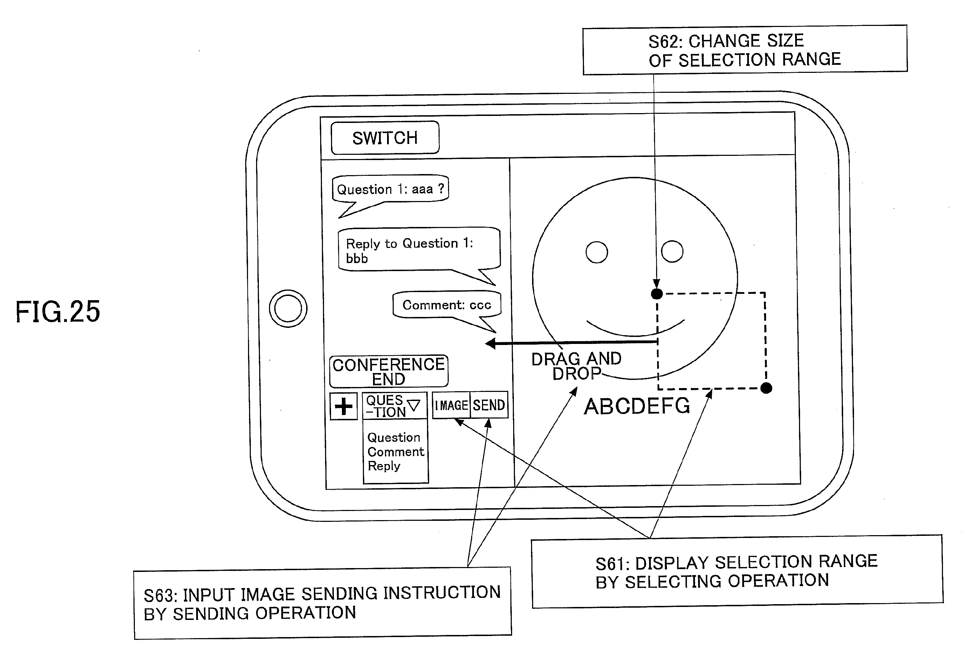

Additionally, although a text is transmitted and received in the above-mentioned example, an image may be transmitted and received between the smart devices 13A and 13B. FIG. 25 is an illustration of the chatting screen displayed when sending an image as a reply in step S36. FIG. 25 illustrates steps for sending an image from the smart device 13A to the smart device 13B.

First, the smart device 13A receives, in step S62, an image selecting operation or a transmission preparing operation. The image selecting operation may be an operation of touch and long press applied to an image displayed in an image display area of the chatting screen, or may be a selecting operation applied to the image display area to encircle an image by tracing along a circumference of the image by a finger. The transmission preparing operation may be an operation of inputting "@image" into a comment field.

Thereafter, the smart device 13A receives, in step S62, a changing operation of changing a size of a selecting area from the user. Then, upon reception of a sending operation, the smart device 13A sends a chat message such as in step S37 of FIG. 20. The sending operation may be a drag and drop operation to move the selected range encircled by selecting lines (dashed lines in FIG. 25) into the comment display area, or may be a selection of the send button.

A description is given below, with reference to FIG. 21, of the chat message sent when sending the image as mentioned above. In FIG. 21, the symbol "type" is replaced by "image" that indicates an image. The symbol "text" is replaced by a symbol indicating a selected position such as, for example, coordinates or the like. By sending such a chat message, the file server 14 or the smart device 13B can uniquely identify the selected area. Thus, the file server 14 can store the log by identifying the selected area. Additionally, the smart device 13B can display the message by identifying the selected area. Note that an image file from which the selected area is extracted may be sent in addition to the aforementioned chat message.

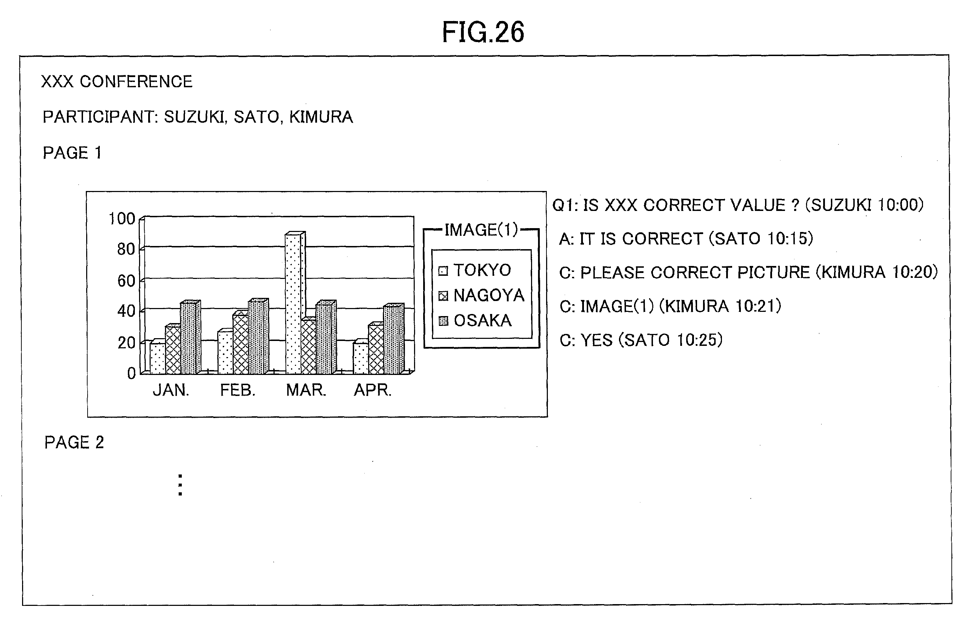

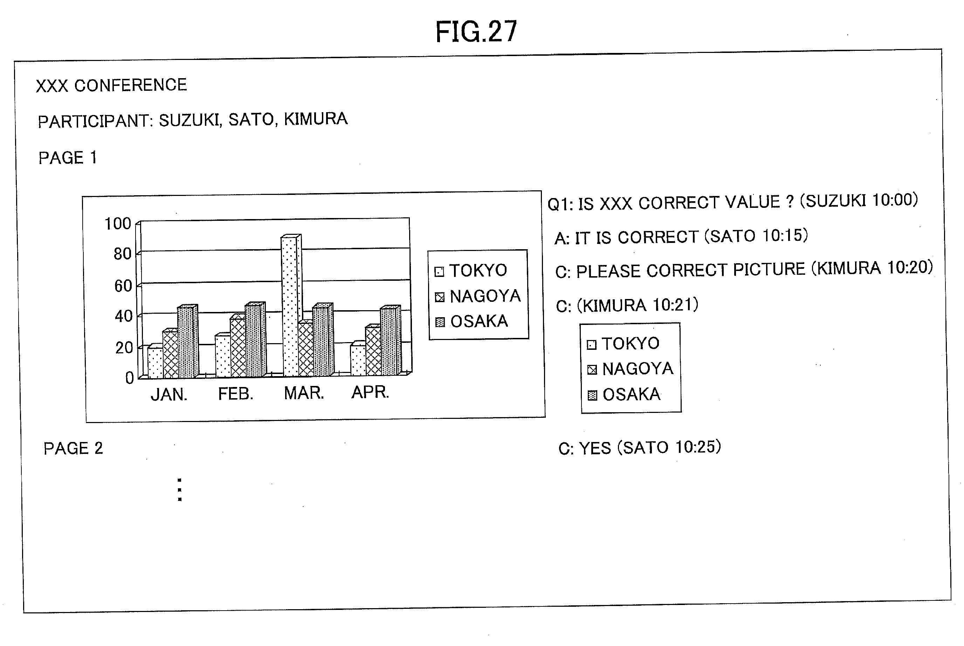

FIGS. 26 and 27 illustrate output examples of the minutes created by the minutes creating process when an image is sent as mentioned above. For example, as illustrated in FIG. 26, the minutes may be created by adding a highlight, an emphasizing line or a frame, which indicates the selected range of the sent image, to the displayed image. Alternatively, as illustrated in FIG. 27, the minutes may be created by using an image portion, which is sent according to the above-mentioned process, by handling the image portion as a comment.

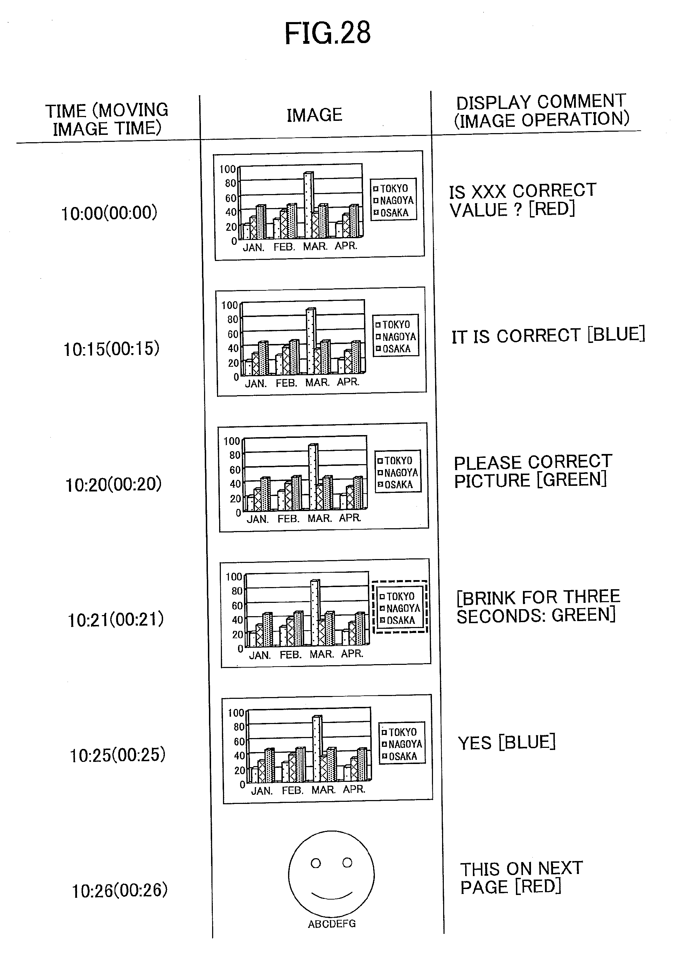

Additionally, the file server 14 may output the minutes based on the log illustrated in FIG. 22 so that the minutes can be referred to on the screen of the smart device 13. FIG. 28 is an illustration of minutes created as a moving image.

For example, a moving image is created by setting a start time (00:00) of the moving image to the conference start time (time at which the message is displayed for the first time; in this case (00:00)). The displayed image is an image of the file page that was being referred to when the comment was sent. Additionally, the comment is displayed by being superimposed on the image at the time when the comment was sent. The moving image may be created according to a color distinction applied to the comment to identify each of the users. Additionally, the moving image may be created using a function of reading software so that the voice of reading the comment is output at the time when the comment was sent.

The moving image is created by editing the image so that the selected part is highlighted on the screen at the time when the selected image was sent. The highlight is caused to continue for a predetermined time (for example, three seconds). When the page referred to is changed, the moving image is created to change the displayed image.

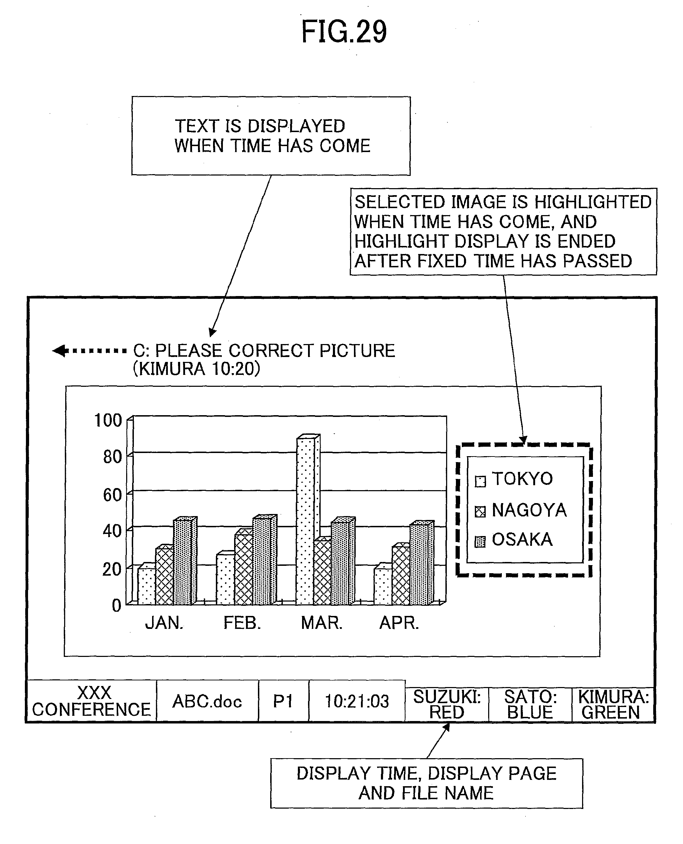

FIG. 29 is an illustration of a moving image displayed on a screen when the above-mentioned moving image is reproduced by the smart device 13. A conference name, display file name, page number, conference time and color distinction of each user are displayed on the bottom side of the display screen. When the time to display the comment is reached, the comment is displayed on the display screen. Here, the comment may be displayed for a fixed time, or may be displayed so that the comment moves from one side of the screen to the opposite side of the screen. Additionally, the selected part is highlighted at the time when the selected image is sent.

The file server 14 may retain the configuration information illustrated in FIG. 28 so as to cause the smart device 13 to create and display the above-mentioned moving image based on the configuration information. Alternatively, the file server 14 may create a moving image file (for example, a file provided with an extension such as "flv"), and the smart device 13 may acquire and display the moving image file.

In the information processing system 1 according to the present embodiment, the reference file and reference pages are recorded as a log. Accordingly, the information processing system 1 according to the present embodiment is capable of creating the minutes illustrated in FIG. 24 even when each of the smart devices 13 synchronously displays the contents of the same file.

It should be noted that although the file server 14 creates the minutes from a log according to the sequence chart illustrated in FIG. 20, at least a part of the minutes creating process may be performed by the chat server 12.

Although the conference start notification and the conference end notification are sent separately from the chat server 12 to the file server 14, such notifications can be done by sending a notification of the start time and end time of the conference at once.

Additionally, in the sequence chart illustrated in FIG. 20, the sending of the conference start notification and the conference end notification to the file server 14 may be omitted if the logs that are created during the conference are selected in the chat server 12 and the selected logs are sent to the file server 14.

Although the end of the conference is selected by the user who operates the smart device 13A pressing the conference end button, the user may designate a file type and saving location of the minutes when selecting the end of the conference.

### <Other System Structures>

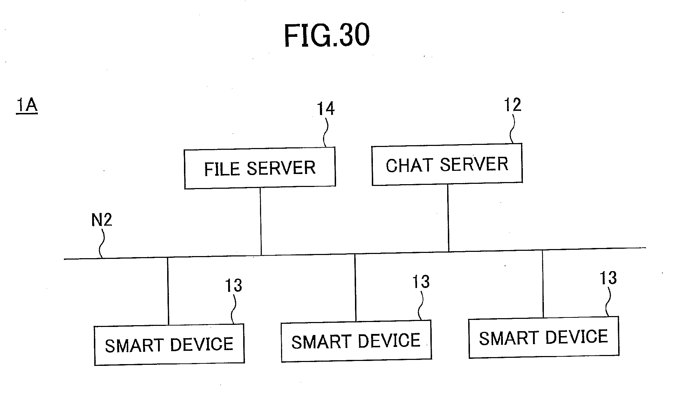

The structure of the information processing system 1 illustrated in FIG. 1 is merely an example, and the information processing system 1 may have the structure illustrated in FIG. 30. FIG. 30 is a structure diagram of another information processing system according to the present embodiment.

The information processing system 1A illustrated in FIG. 30 includes a chat server 12, a plurality of smart devices 13 and a file server 14 that are connected to a network N2 such as a LAN. Because the information processing system 1A does not perform communication through a firewall (corresponding to the FW 15 in FIG. 1), the relay server 11 is omitted. According to the information processing system 1A illustrated in FIG. 30, the same process as the above-mentioned information processing system 1 can be performed. It should be noted that in the information processing system 1A illustrated in FIG. 30, the chat server 12 and the file server 14 may be integrated into one body.

### <Summary>

According to the present embodiment, the minutes can be created from the log in which the contents of chatting and the contents of a file created during the conference. In the created minutes, the contents of speech are arranged according to the type of speech such as a question, comment, reply, etc. The minutes are output together with the contents of the file that was referred to when the contents of speech was sent. Thus, according to the present embodiment, the comment and point of view to the file that is given by a user joining the chatting can be output by a file of a type that is easily viewable.

It should be noted that each of the information processing systems 1 and 1A can be constituted by one or more information processing apparatuses. If the above-mentioned functions can be achieved as an entire system, any one of the information processing apparatuses may be provided with the functions.

All examples and conditional language provided herein are intended for pedagogical purposes of aiding the reader in understanding the invention and the concepts contributed by the inventors to further the art, and are not to be construed as limitations to such specifically recited examples and conditions, nor does the organization of such examples in the specification relate to a showing of the superiority or inferiority of the invention. Although one or more embodiments of the present invention have been described in detail, it should be understood that the various changes, substitutions, and alterations could be made hereto without departing from the spirit and scope of the invention.

## Claims

1. An information processing apparatus comprising a computer that is configured to execute a program to perform a process including:
storing files shared by a plurality of users in a file storage;
distributing information, which is received from one of a plurality of terminal devices, to at least another one of said terminal devices, which is related to said one of said terminal devices; and
outputting a log of one of the files and the information that are displayed on said one of said terminal devices during a predetermined time period.

2. The information processing apparatus as claimed in claim 1, wherein said one of the files of the log to be output is acquired from said file storage and the information of the log to be output is acquired according to a history of displaying the files and the information on said one of said terminal devices.

3. The information processing apparatus as claimed in claim 2, wherein said predetermined time period during which the log of the one of the files and the information are displayed on said one of said terminal devices is a time period from a time when a start notification is received and until a time when an end notification is received from said one of said terminal devices.

4. The information processing apparatus as claimed in claim 3, wherein
the information exchanged between said terminal devices by said distributing includes information regarding a type of speech that is performed in a chatting system, the type of speech including a question, a comment and a reply and identification information to identify related information, and
said outputting outputs the log in which the information including a question as a type of speech is related to the information including a reply as a type of speech that is directed to said question, said reply directed to said question being designated in the related information.

5. The information processing apparatus as claimed in claim 4, wherein the log output by said outputting indicates a relationship between the information displayed together with one of the files and the information displayed together with the same one of the files.

6. An information processing system, comprising;
the information processing apparatus as claimed in claim 1; and
said terminal devices connected to said information processing apparatus through a network,
wherein each of said terminal devices is configured to display the files acquired from said file storage and the information distributed and exchanged between said terminal devices by said distributing part.

7. The information processing system as claimed in claim 6, wherein
each of said terminal devices is mounted with an application that is connected to said information processing apparatus;
said distributing distributes the information, which is received from the application of one of said terminal devices, to the application of the another one of said terminal devices, which is related to the application of said one of said terminal devices; and
said application is configured to display the files acquired from said file storage and the information distributed and exchanged between said terminal devices by said distributing part.

8. The information processing system as claimed in claim 6, wherein said one of the files of the log to be output is acquired from said file storage and the information of the log to be output is acquired according to a history of displaying the files and the information on said one of said terminal devices.

9. The information processing system as claimed in claim 8, wherein said predetermined time period during which the log of the one of the files and the information are displayed on said one of said terminal devices is a time period from a time when a start notification is received and until a time when an end notification is received from said one of said terminal devices.

10. The information processing system as claimed in claim 9, wherein
the information exchanged between said terminal devices by said distributing includes information regarding a type of speech that is performed in a chatting system, the type of speech including a question, a comment and a reply and identification information to identify related information, and
said outputting outputs the log in which the information including a question as a type of speech is related to the information including a reply as a type of speech that is directed to said question, said reply directed to said question being designated in the related information.

11. The information processing system as claimed in claim 10, wherein the log output by said outputting indicates a relationship between the information displayed together with one of the files and the information displayed together with the same one of the files.

12. An information processing method, comprising
storing files shared by a plurality of users in a file storage;
distributing information, which is received from one of a plurality of terminal devices, to at least another one of said terminal devices, which is related to said one of said terminal devices; and
outputting a log of one of the files and the information that are displayed on said one of said terminal devices during a predetermined time period.
